(19) Europäisches Patentamt / European Patent Office / Office européen des brevets

(11) **EP 3 337 059 B1**

## (12) EUROPEAN PATENT SPECIFICATION

(45) Date of publication and mention
of the grant of the patent:
**24.06.2020 Bulletin 2020/26**

(51) Int Cl.:
***H04B 7/26*** *(2006.01)*

(21) Application number: **16290236.5**

(22) Date of filing: **15.12.2016**

(54) **ASSIGNING AN EXTENDER TO AN ACCESS POINT**

ZUWEISUNG EINES EXTENDERS ZU EINEM ZUGRIFFSPUNKT

ATTRIBUTION D'UNE EXTENSION À UN POINT D'ACCÈS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.06.2018 Bulletin 2018/25**

(73) Proprietor: **Alcatel Lucent
91620 Nozay (FR)**

(72) Inventors:
• **Atawia, Ramy
2018 Antwerpen (BE)**
• **Gacanin, Haris
2018 Antwerpen (BE)**

(74) Representative: **IP HILLS NV
Hubert Frère-Orbanlaan 329
9000 Gent (BE)**

(56) References cited:
• **LI QIAN ET AL: "Mobile association for wireless
heterogeneous networks with cooperative
relays: optimal framework and implementation
schemes", TELECOMMUNICATION SYSTEMS,
BALTZER SCIENCE PUBLISHERS, BASEL, CH,
vol. 60, no. 1, 4 March 2015 (2015-03-04), pages
17-27, XP035515793, ISSN: 1018-4864, DOI:
10.1007/S11235-014-9918-Z [retrieved on
2015-03-04]**

EP 3 337 059 B1

## Description

## Technical Field

The present disclosure generally relates to Wi-Fi networks comprising a plurality of access points, APs, and a range extender, wherein the range extender is to be assigned to a selected AP out of the plurality of APs.

## Background

In Wi-Fi networks comprising a plurality of APs, each AP covers an area within which Wi-Fi stations, STAs, can connect to an AP. The coverages of the APs may intersect on dedicated locations, but on other locations no coverage may be present such that coverage holes arise.

A wireless repeater or range extender takes an existing wireless signal from an AP and rebroadcasts it to create an additional network and corresponding coverage in order to tackle the problem of coverage holes. This way STAs that are out of reach of the APs' coverages can still be connected by the range extender that bridges the signal from the STA to the AP. In this disclosure, the wireless link from the range extender to the AP is further referred to as the back-haul and the wireless link from the range extender to the connecting STAs as the front-haul.

Most assignment schemes are based on physical measurements such as received signal strength, number of STAs and hop counts in order to evaluate a candidate AP for assigning an extender.

In "Mobile association for wireless heterogenous networks with cooparative relays: optimal framework and implementation schemes', by Qian Li, Rose Qingyang Hu, Geng Wu, published in Telecommunication Systems, Baltzer Science Publishers, Basel, CH, vol. 60, no. 1, 4 March 2015, pages 17-27, a method for maximizing a network capacity and balancing traffic load among network nodes is disclosed.

## Summary

A problem with the solution above is it does not necessarily increase the overall efficiency and may even decrease the performance of some STAs.

It is an objective of the present disclosure to alleviate these problems and to provide a solution that assigns a range extender to an AP in an optimized way.

This objective is achieved, according to a first aspect, by a computing system for assigning a range extender to a selected access point, AP, from a plurality of APs, the computing system comprising:

- a collection module configured to determine:

  o the range extender's back-haul throughput capability for when connected with each of the APs;
  ◦ the range extender's front-haul throughput capability for when connected with each of the APs; and
  ◦ for each AP with connected Wi-Fi stations, STAs, a sum of an amount of uplink interference to each connected STA;

- a selection module configured to select the selected AP according to an optimization function maximizing the range extender's back-haul and front-haul throughput capability and minimizing the amount of uplink interference.

Thus three parameters are determined by the collection module. A back-haul throughput capability of the range extender as well as its front-haul throughput capability is determined as if the range extender was connected with an AP and repeated for each of the APs. A third parameter is determined for each AP by summing the amount of uplink interference, or upload traffic, for each connected STA. Next, a selection module will select an AP for which the extender will be assigned. This is done by taking into account the three parameters for each of the APs, more in particular by maximizing the front-haul and back-haul capabilities and minimizing the sum of amount of uplink interference. The AP fulfilling these conditions is selected and the extender is assigned to this AP.

An advantage of determining the front-haul as well as the back-haul throughput capabilities is that the assignment is not only based on current performance parameters of the network, but also predicts the performance of the range extender when connected to an AP based on measurable parameters. This way, it may be evaluated which AP will be the most efficient to be connected with the extender prior to the connection.

It is an advantage to first determine the uplink interference to each of the STAs, because, when a range extender is connected to an AP, the connection may also reduce the throughput to STAs directly connected to the AP. An AP having less uplink interference is therefore preferred over an AP having more uplink interference since the impact on directly connected STAs will be less due to the decreased risk of uplink interference at the AP between the extender and the connected STAs of the AP.

Thus by combining the three determined parameters and by the use of an optimization function, an AP will be selected out of the plurality of APs to which a range extender is assigned that results in an overall optimal throughput. This will optimize the performance of both the STAs connected to the AP and the range extender.

According to an embodiment, the range extender's back-haul throughput capability is based on a size of the AP's access categories queues.

The size of the AP's access categories queues expresses the contention and traffic of the AP since these sizes are indicative for the amount of traffic on a channel and the channel utilization. The size of the AP's access categories queues of each of the APs may further be normalized by calculating averages of the sizes.

The advantage is the range extender's back-haul throughput capability can be determined by data that is readily available in the AP.

According to an embodiment, the optimization function maximizes the range extender back-haul throughput capability by selecting an AP having a minimum size of the AP's access categories queues.

Because the range extender back-haul throughput capability is inversely directly proportional to the size of the AP's access categories queues the optimization function minimizes this.

According to an embodiment, the range extender's front-haul throughput capability when connected to an AP is calculated by a contention of a channel used by the AP and on an interference impacting the channel.

The range extender's front-haul throughput capability is determined based on both a contention of a channel used by the AP and on an interference impacting the channel.

A contention of a channel may be calculated as a ratio of time the channel is busy over a sample period.

According to an embodiment, the interference is calculated by a packet retransmission ratio of the AP.

The interference may be determined by the ratio of retransmitted packets over the total number of sent packets. Both these parameters are readily available at the APs.

According to an embodiment, the optimization function maximizes the range extender's front-haul throughput capability by selecting an AP having a minimum combination of the contention and interference.

Since the contention is calculated as a ratio of the time the channel is busy over a sample period and the interference as a ratio of transmitted packets over the total packets sent, they may be combined such that a mean value of both ratios may be calculated. This mean value is inversely proportional to the range extender's front-haul throughput capability. Thus, by minimizing this mean value for each AP, a corresponding range extender's front-haul throughput capability may be determined.

According to an embodiment, the amount of uplink interference of an AP connected to a STA is further related to a signal strength level between each STA and the AP.

APs may have an equal amount of uplink interference, but their respective connected STAs may be located on different distances from the AP to which they are connected to. By taking into account a signal strength level between each STA and the AP, the distance from each STA to the AP is taken into account as well in the overall optimization.

An AP with an amount of uplink interference but with connected STAs located close to it will be preferred over an AP having the same amount of uplink interference but with connected STAs located further away.

According to an embodiment, the optimization function minimizes the amount of uplink interference related to a signal strength level.

According to a second aspect, the disclosure relates to a method for assigning a range extender to a selected access point, AP, from a plurality of APs, the method comprising:

- determining the range extender's back-haul throughput capability for when connected with each of the APs;
- determining the range extender's front-haul throughput capability for when connected with each of the APs; and
- determining for each AP with connected Wi-Fi stations, STAs, a sum of an amount of uplink interference to each connected STA;
- selecting the selected AP according to an optimization function maximizing the range extender's back-haul and front-haul throughput capability and minimizing the amount of uplink interference.

According to a third aspect, the disclosure relates to a computer program product comprising a computer-executable instructions for performing the method according to the second aspect when the program is run on a computer.

According to a fourth aspect, the disclosure relates to a computer readable storage medium comprising the computer program product according to third aspect.

According to a fifth aspect, the disclosure relates to a data processing system programmed for carrying out the method according to the second aspect.

## Brief Description of the Drawings

Fig. 1 illustrates a computing system for assigning a range extender to a selected AP according to an embodiment of the disclosure;

Fig. 2 illustrates an environment comprising a plurality of APs;

Fig. 3 illustrates steps performed to assign a range extender to a selected AP;

Fig. 4 illustrates a relation between a ratio of vacant airtime for a range extender and an average queue size;

Fig. 5 illustrates a relation between a front-haul throughput and a channel utilization and retransmission ratio;

Fig. 6 illustrates a hidden node problem between a user with uplink interference and an extender; and

Fig. 7 illustrates a suitable computing system for performing steps according to embodiments of the disclosure.

## Detailed Description of Embodiment(s)

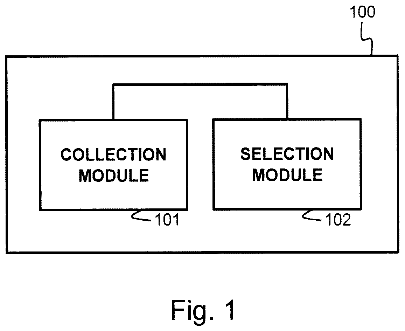

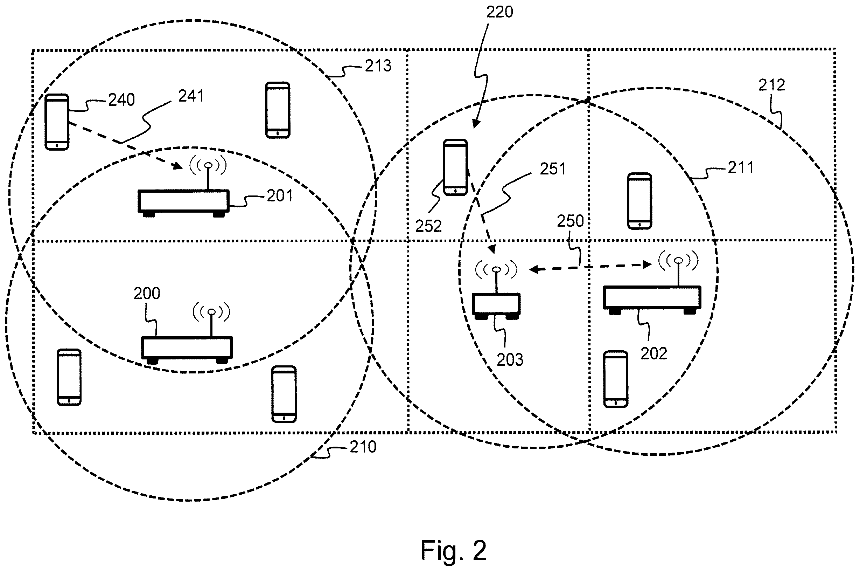

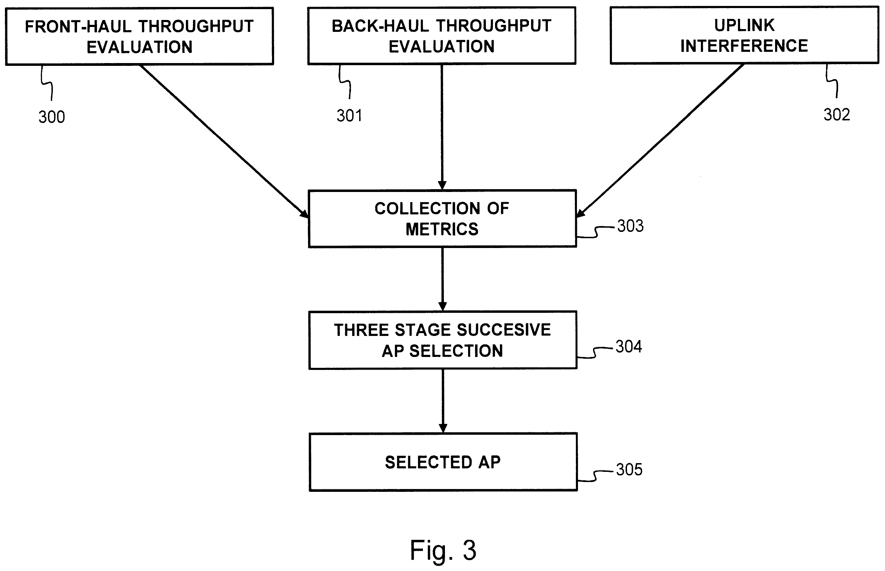

Fig. 1 illustrates a computing system 100 comprising a collection module 101 and a selection module 102. The computing system 100 is configured to assign a range extender to a selected access point (AP) from a plurality of APs. Fig. 2 illustrates an environment comprising such a plurality of APs 200-202 and a range extender 203. Fig. 3 illustrates steps performed by the computing system 100 to assign the range extender 203 to one of the APs 200-202.

Each AP 200-202 covers a particular area in which Wi-Fi stations (STAs) may connect to an AP. In Fig. 2 these coverages are illustrated, such as coverage 201 for AP 200, coverage 212 for AP 202 and coverage 213 for AP 201. In the environment there are STAs located outside these coverages 210-213, such as STA 252. Hence, STA 252 is located in a coverage hole 200 of the APs 200-202. Hence, a range extender 203 takes an existing wireless signal from an AP and rebroadcasts it to create a second network. In Fig. 2 the range extender 203 is connected to AP 202 such that a second network with coverage 220 is created. STA 252 may be connected 251 with the range extender 203.

Prior to which AP 200-201 the range extender 203 will be connected, the collection module 101 of the computing system 100 is configured to determine the range extender's 203 back-haul throughput capability 300, the range extender's front-haul throughput capability 301 and for each AP 200-202 with connected 241 STAs, such as 240 for AP 201, a sum of amount of uplink interference 302. Based on these three metrics 303 the collection module select 305 an AP according to an optimization function, such as a three stage successive AP selection 304.

According to an embodiment, the range extender's back-haul throughput capability is based on a size of the AP's access categories queues. This may, for example, be a normalized average and denoted as $L$ and is calculated as

$$L= mean(sum(Hv[l] \odot Hi[l])/(sum(Hv[l]))/(t*argmax(Hi))$$

wherein the variables are can be retrieved by the following attributes:

- *$Hi=Device.WiFi.AccessPoint.(i).AC.\{l\}.OutQLenHistogramIntervals;$*
- *$t=Device.WiFi.AccessPoint.\{i\}.AC.\{l\}.OutQLenHistogramSampleInterval;$*
- *$Hv=Device.WiFi.AccessPoint.(i).AC.\{l\}.Stats.OutQLenHistogram;$*

and are standardized by the Broadband Forum TR-181 standard. Operator $\odot$ is the dot product between the histogram intervals $Hi$ and their values $Hv$ in order to calculate an average queue size for each access category l.

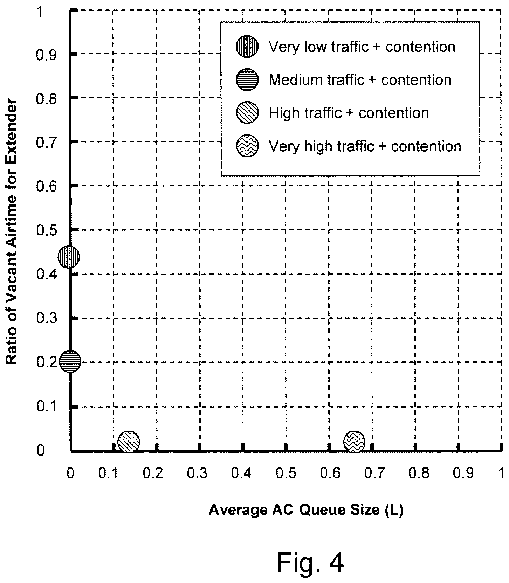

An AP with a minimum value of $L$ is the best candidate to be connected with the extender 203 since it either has a few amount of traffic and/or low channel utilization. In Fig. 4 an average access category queue size $L$ in relation to a ratio of vacant airtime for an extender, which is related to a back-haul link throughput, is illustrated.

According to an embodiment, the range extender's back-haul throughput capability is calculated by a contention of a channel used by an AP and on an interference impacting the channel. The contention, denoted as Uc, may be according to the IEEE standard 802.11-2012 calculated as

$$U_c{}^E=(channel\_busy\_time/(dot11ChannelUtilizationBeaconIntervals*$$

$$dot11BeaconPeriod * 1024)).$$

The interference can be detected by the percentage of retransmitted packets, denoted as $R_c$, by all the APs 200-202 operating on a channel $c$ and calculated by:

$$R=sum(Device.WiFi.SSID.\{i\}.Stats.RetransCount)/sum(Device.WiFi.SSI$$

$$D.\{i\}.Stats.PacketsSent).$$

The range extender's back-haul throughput capability may be than be formulated as a score $S_c$ for each channel $c$ and calculated as:

$$S_c = (U_c{}^E + R_c)/2.$$

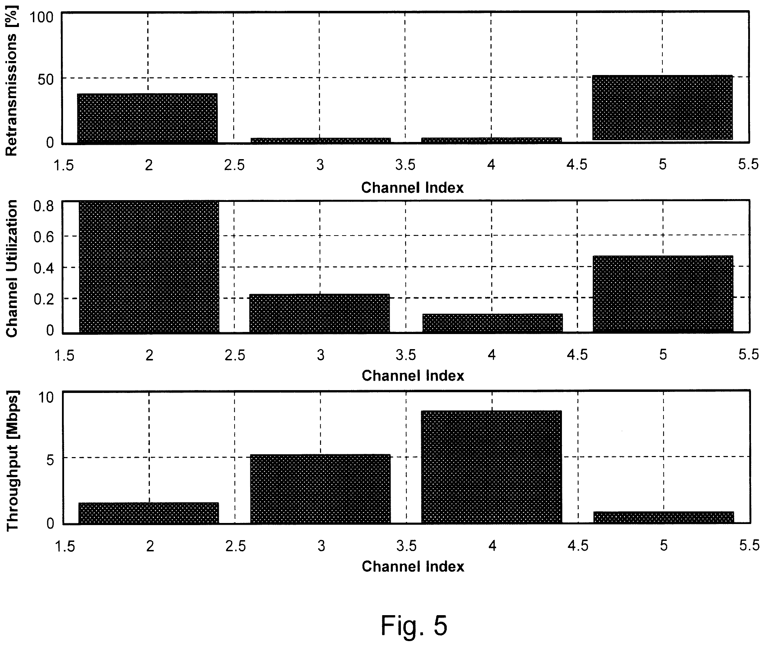

The AP having a minimum score $S_c$ will be the best candidate for maximizing the range extender 203 front-haul throughput as illustrated in Fig.5.

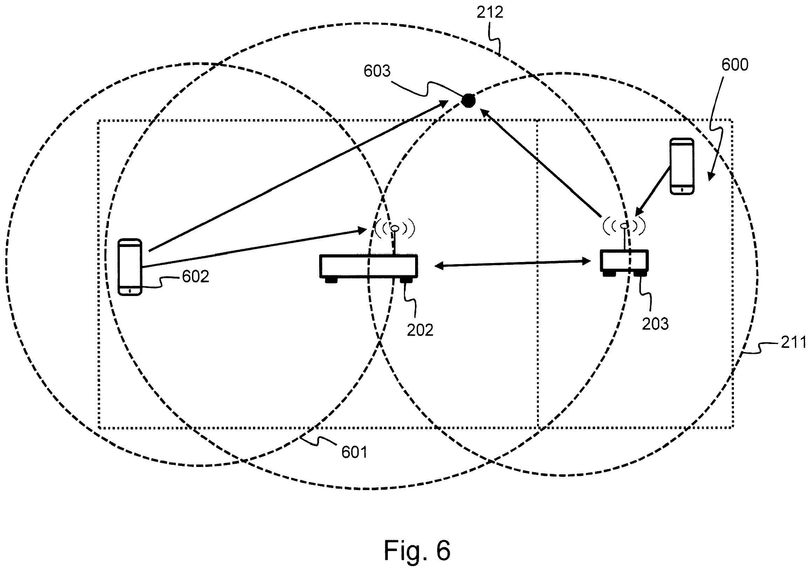

The AP with less uplink interference will be preferred over another AP with high uplink interference from far users to avoid creating a hidden node problem as illustrated in Fig.6. The coverage 601 of STA 602 does not intersect with the coverage 211 of the range extender 203. A STA in area 600 is also out of the coverage 212 of AP 202. In point 603 a hidden node problem can be created.

The amount of uplink interference from an AP to a STA will be captured by a metric $M$ and determined as:

$$M = sum(max(0, (RSSI'-RSSI[j])/(RSSI')) * max(0, (B_U'- B_U [j])/( B_U')));$$

wherein,

- $RSSI[j]=Device.WiFi.AccessPoint.\{i\}.AssociatedDevice.\{j\}. SignalStrengh;$
- $Bu[j]=Device.WiFi.AccessPoint.\{i\}.AssociatedDevice.\{j\}. Stats. BytesReceived;$

wherein $B_U'$ and $RSSI'$ are respectively the maximum tolerable values for an uplink traffic and received signal strength indicator.

Next, the metrics $L$, $S_c$ and $M$ are collected 303 for each AP. Based on these metrics, an AP will be selected 305 which will be connected 250 to the range extender 252. This selection will be performed using an optimization function, which is, for example, a three stage successive algorithm.

This three stage successive algorithm first determines all the APs having the best channel score, which corresponds to the lowest value of $S_c$. In case two channels are very close scores, all their APs are passed to the next stage.

In the next stage, the APs with very high values of $M$ are then removed from the candidate list.

In the final stage, among the remaining APs, the one with the minimal queue length $L$ is selected 305 to be connected 250 with the range extender 252.

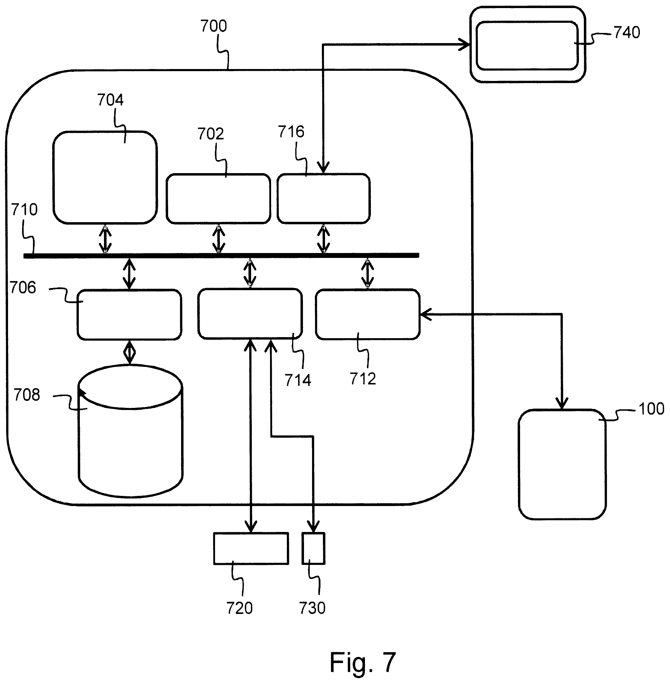

Fig. 7 shows the computing system 100 according to an embodiment of the invention. Computing system 100 is suitable for performing the steps according to the above embodiments. Computing system 100 may also be incorporated in or used as access point 200-202 or range extender 203. Computing system 100 may in general be formed as a suitable general purpose computer and comprise a bus 710, a processor 702, a local memory 704, one or more optional input interfaces 714, one or more optional output interfaces 716, a communication interface 712, a storage element interface 706 and one or more storage elements 708. Bus 710 may comprise one or more conductors that permit communication among the components of the computing system 100. Processor 702 may include any type of conventional processor or microprocessor that interprets and executes programming instructions. Local memory 704 may include a random access memory (RAM) or another type of dynamic storage device that stores information and instructions for execution by processor 702 and/or a read only memory (ROM) or another type of static storage device that stores static information and instructions for use by processor 702. Input interface 714 may comprise one or more conventional mechanisms that permit an operator to input information to the computing system 100, such as a keyboard 720, a mouse 730, a pen, voice recognition and/or biometric mechanisms, etc. Output interface 716 may comprise one or more conventional mechanisms that output information to the operator, such as a display 740, etc. Communication interface 712 may comprise any transceiver-like mechanism such as for example one or more Ethernet interfaces that enables computing system 100 to communicate with other devices and/or systems, for example with access point 200-202. The communication interface 712 of computing system 100 may be connected to such another computing system by means of a local area network (LAN) or a wide area network (WAN) such as for example the internet. Storage element interface 706 may comprise a storage interface such as for example a Serial Advanced Technology Attachment (SATA) interface or a Small Computer System Interface (SCSI) for connecting bus 610 to one or more storage elements 708, such as one or more local disks, for example SATA disk drives, and control the reading and writing of data to and/or from these storage elements 708. Although the storage elements 708 above is described as a local disk, in general any other suitable computer-readable media such as a removable magnetic disk, optical storage media such as a CD or DVD, -ROM disk, solid state drives, flash memory cards, ... could be used. The system 100 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A computing system (100) for assigning a range extender (203) to a selected access point (202), AP, from a plurality of APs (200-202), the computing system (100) comprising:

   - a collection module (101) configured to determine:

     ○ the range extender's (203) back-haul throughput capability (301) for when connected with each of the APs (200-202);
     ○ the range extender's (203) front-haul throughput capability (300) for when connected with each of the APs (200-202); and
     ○ for each AP (200-202) with connected Wi-Fi stations, STAs, (240, 252) a sum of an amount of uplink interference (302) to each connected STA (240, 252);

   - a selection module (102) configured to select the selected AP according to an optimization function maximizing the range extender's (203) back-haul (301) and front-haul (300) throughput capability and minimizing the amount of uplink interference (302).

2. The computing system (100) according to claim 1, wherein the range extender's (203) back-haul throughput (301) capability is based on a size of the AP's access categories queues.

3. The computing system (100) according to claim 2, wherein the optimization function maximizes the range extender (203) back haul throughput (301) capability by selecting an AP having a minimum size of the AP's access categories queues.

4. The computing system (100) according to claim 1, wherein the range extender's (203) front-haul throughput (300) capability when connected to an AP (200-202) is calculated by a contention of a channel used by the AP and on an interference impacting the channel.

5. The computing system (100) according to claim 4, wherein the interference (302) is calculated by a packet retransmission ratio of the AP.

6. The computing system (100) according to claim 5, wherein the optimization function maximizes the range extender's (203) front-haul throughput (300) capability by selecting an AP having a minimum combination of the contention and interference.

7. The computing system (100) according to claim 1, wherein the amount of uplink interference (302) of an AP (200-202) connected to an STA (240, 252) is further related to a signal strength level between each STA (240, 252) and the AP (200-202).

8. The computing system (100) according to claim 7, wherein the optimization function minimizes the amount of uplink interference related to a signal strength level.

9. A method for assigning a range extender (203) to a selected access point, AP (202), from a plurality of APs (200-202), the method comprising:

   - determining the range extender's back-haul throughput capability for when connected with each of the APs (300);
   - determining the range extender's front-haul throughput capability for when connected with each of the APs (301); and
   - determining for each AP with connected Wi-Fi stations, STAs, a sum of an amount of uplink interference to each connected STA (302);
   - selecting (305) the selected AP according to an optimization function maximizing the range extender's back-haul and front-haul throughput capability and minimizing the amount of uplink interference.

10. A computer program product comprising a computer-executable instructions for performing the method according to claim 9 when the program is run on a computer.

11. A computer readable storage medium comprising the computer program product according to claim 10.

12. A data processing system programmed for carrying out the method according to claim 9.

**Patentansprüche**

1. Rechensystem (100) zum Zuweisen eines Reichweitenerweiterers (203) an einen ausgewählten Zugriffspunkt (202), AP, mehrerer AP (200-202), wobei das Rechensystem (100) Folgendes umfasst:

   - ein Sammelmodul (101), das konfiguriert ist, Folgendes zu bestimmen:

     ◦ die "Backhaul"-Durchsatzfähigkeit (301) des Reichweitenerweiterers (203), wenn er mit jedem der AP (200-202) verbunden ist;
     ◦ die "Fronthaul"-Durchsatzfähigkeit (300) des Reichweitenerweiterers (203), wenn er mit jedem der AP (200-202) verbunden ist, und
     ◦ für jeden AP (200-202) mit verbundenen Wi-Fi-Stationen, STA, (240, 252) eine Summe eines Umfangs von "Uplink"-Störung (302) zu jeder verbundenen STA (240, 252);

   - ein Auswahlmodul (102), das konfiguriert ist, den ausgewählten AP gemäß einer Optimierungsfunktion auszuwählen, die die "Backhaul"-Durchsatzfähigkeit (301) und die "Fronthaul"-Durchsatzfähigkeit (300) des Reichweitenerweiterers (203) maximiert und den Umfang von "Uplink"-Störung (302) minimiert.

2. Rechensystem (100) nach Anspruch 1, wobei die "Backhaul"-Durchsatzfähigkeit (301) des Reichweitenerweiterers (203) auf einer Größe der Zugriffskategorienwarteschlangen der AP basiert.

3. Rechensystem (100) nach Anspruch 2, wobei die Optimierungsfunktion die "Backhaul"-Durchsatzfähigkeit (301) des Reichweitenerweiterers (203) maximiert, indem ein AP ausgewählt wird, der eine minimale Größe der Zugriffskategorienwarteschlangen der AP aufweist.

4. Rechensystem (100) nach Anspruch 1, wobei die "Fronthaul"-Durchsatzfähigkeit (300) des Reichweitenerweiterers (203) dann, wenn er mit einem AP (200-202) verbunden ist, durch einen Konflikt eines Kanals, der durch den AP verwendet wird, und eine Störung, die den Kanal beeinflusst, berechnet wird.

5. Rechensystem (100) nach Anspruch 4, wobei die Störung (302) durch ein Paketneusendeverhältnis des AP berechnet wird.

6. Rechensystem (100) nach Anspruch 5, wobei die Optimierungsfunktion die "Fronthaul"-Durchsatzfähigkeit (300) des Reichweitenerweiterers (203) maximiert, indem ein AP ausgewählt wird, der eine minimale Kombination des Konflikts und der Störung aufweist.

7. Rechensystem (100) nach Anspruch 1, wobei der Umfang der "Uplink"-Störung (302) eines AP (200-202), der mit einer STA (240, 252) verbunden ist, ferner mit einem Signalstärkenpegel zwischen jeder STA (240, 252) und dem AP (200-202) in Zusammenhang steht.

8. Rechensystem (100) nach Anspruch 7, wobei die Optimierungsfunktion den Umfang der "Uplink"-Störung, die im Zusammenhang mit einem Signalstärkenpegel steht, minimiert.

9. Verfahren zum Zuweisen eines Reichweitenerweiterers (203) an einen ausgewählten Zugriffspunkt, AP, (202) mehrerer AP (200-202), wobei das Verfahren Folgendes umfasst:

   - Bestimmen der "Backhaul"-Durchsatzfähigkeit des Reichweitenerweiterers, wenn er mit jedem der AP (300) verbunden ist;
   - Bestimmen der "Fronthaul"-Durchsatzfähigkeit des Reichweitenerweiterers, wenn er mit jedem der AP (301) verbunden ist; und
   - Bestimmen für jeden AP mit verbundenen Wi-Fi-Stationen, STA, einer Summe eines Umfangs von "Uplink"-Störung mit jeder verbundenen STA (302);
   - Auswählen (305) des ausgewählten AP gemäß einer Optimierungsfunktion, die die "Backhaul"-Durchsatzfähigkeit und die "Fronthaul"-Durchsatzfähigkeit des Reichweitenerweiterers maximiert und den Umfang von "Uplink"-Störung minimiert.

10. Computerprogrammprodukt, das computerausführbare Anweisungen zum Durchführen des Verfahrens nach Anspruch 9, wenn das Programm auf einem Computer läuft, umfasst.

11. Computerlesbares Speichermedium, das das Computerprogrammprodukt nach Anspruch 10 umfasst.

12. Datenverarbeitungssystem, das zum Ausführen des Verfahrens nach Anspruch 9 programmiert ist.


**Revendications**

1. Système informatique (100) permettant d'assigner une unité d'amplification de portée (203) à un point d'accès (202), AP, parmi une pluralité d'AP (200-202), le système informatique (100) comprenant :

   - un module de collecte (101) configuré pour déterminer :

      ◦ une capacité de débit en backhaul (301) de l'unité d'amplification de portée (203) dans le cas où elle est connectée à chacun des AP (200-202) ;
      ◦ une capacité de débit en fronthaul (300) de l'unité d'amplification de portée (203) dans le cas où elle est connectée à chacun des AP (200-202) ; et
      ◦ pour chaque AP (200-202) avec des stations, STA, Wi-Fi (240, 252) connectées, une somme d'une quantité d'interférence en voie montante (302) affectant chaque STA connectée (240, 252) ;

   - un module de sélection (102) configuré pour sélectionner l'AP sélectionné selon une fonction d'optimisation qui maximise la capacité de débit en backhaul (301) et en fronthaul (300) de l'unité d'amplification de portée (203) et qui minimise la quantité d'interférence en voie montante (302).

2. Système informatique (100) selon la revendication 1, dans lequel la capacité de débit en backhaul (301) de l'unité d'amplification de portée (203) est basée sur une taille des files d'attente de catégories d'accès de l'AP.

3. Système informatique (100) selon la revendication 2, dans lequel la fonction d'optimisation maximise la capacité de débit en backhaul (301) de l'unité d'amplification de portée (203) en sélectionnant un AP dont la taille des files d'attente de catégories d'accès est minimale.

4. Système informatique (100) selon la revendication 1, dans lequel la capacité de débit en fronthaul (300) de l'unité d'amplification de portée (203), lorsqu'elle est connectée à un AP (200-202), est calculée par une contention d'un canal utilisé par l'AP et sur une interférence impactant le canal.

5. Système informatique (100) selon la revendication 4, dans lequel l'interférence (302) est calculée au moyen d'un rapport de retransmission de paquets de l'AP.

6. Système informatique (100) selon la revendication 5, dans lequel la fonction d'optimisation maximise la capacité de débit en fronthaul (300) de l'unité d'amplification de portée (203) en sélectionnant un AP dont une combinaison de la contention et de l'interférence est minimale.

7. Système informatique (100) selon la revendication 1, dans lequel la quantité d'interférence en voie montante (302) d'un AP (200-202) connecté à une STA (240, 252) est liée en outre à un niveau d'intensité de signal entre chaque STA (240, 252) et l'AP (200-202).

8. Système informatique (100) selon la revendication 7, dans lequel la fonction d'optimisation minimise la quantité d'interférence en voie montante liée à un niveau d'intensité de signal.

9. Procédé d'assignation d'une unité d'amplification de portée (203) à un point d'accès, AP, (202) parmi une pluralité d'AP (200-202), le procédé comprenant :

- la détermination d'une capacité de débit en backhaul de l'unité d'amplification de portée dans le cas où elle est connectée à chacun des AP (300) ;
- la détermination d'une capacité de débit en fronthaul de l'unité d'amplification de portée dans le cas où elle est connectée à chacun des AP (301) ; et
- la détermination, pour chaque AP avec des stations, STA, Wi-Fi connectées, d'une somme d'une quantité d'interférence en voie montante affectant chaque STA connectée (302) ;
- la sélection (305) de l'AP sélectionné selon une fonction d'optimisation qui maximise la capacité de débit en backhaul et en fronthaul de l'unité d'amplification de portée et qui minimise la quantité d'interférence en voie montante.

10. Produit-programme d'ordinateur comprenant des instructions exécutables par ordinateur permettant de réaliser le procédé selon la revendication 9 lorsque le programme est exécuté sur un ordinateur.

11. Support d'enregistrement lisible par ordinateur comprenant le produit-programme d'ordinateur selon la revendication 10.

12. Système de traitement de données programmé de façon à mettre en œuvre le procédé selon la revendication 9.

100

COLLECTION
MODULE

101

SELECTION
MODULE

102

Fig. 1

Fig. 2

FRONT-HAUL THROUGHPUT
EVALUATION

300

BACK-HAUL THROUGHPUT
EVALUATION

301

UPLINK
INTERFERENCE

302

COLLECTION OF
METRICS
303

THREE STAGE SUCCESIVE
AP SELECTION
304

SELECTED AP
305

Fig. 3

EP 3 337 059 B1

Fig. 4

Fig. 5

Fig. 6

EP 3 337 059 B1

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Mobile association for wireless heterogenous networks with cooparative relays: optimal framework and implementation schemes. **QIAN LI ; ROSE QINGYANG HU ; GENG WU.** Telecommunication Systems. Baltzer Science Publishers, 04 March 2015, vol. 60, 17-27